# EUROPEAN PATENT SPECIFICATION

(11) **EP 2 905 662 B1**
(45) Date of publication and mention of the grant of the patent: **29.11.2017**
(21) Application number: 13844043.3
(22) Date of filing: 21.08.2013
(51) Int. Cl.: G05B 9/03, G06F 11/20, G06F 1/26, G06F 1/28, G06F 1/30

(54) **REDUNDANT COMPUTATION PROCESSING SYSTEM**
REDUNDANTES RECHENVERARBEITUNGSSYSTEM
SYSTÈME DE TRAITEMENT DE CALCUL REDONDANT

(30) Priority: 02.10.2012 JP 2012220473
(43) Date of publication of application: 12.08.2015
(73) Proprietor: Fuji Electric Co., Ltd., Kawasaki-shi Kanagawa 210-9530 (JP)
(72) Inventor: NAKANISHI Takashi, Kawasaki-shi Kanagawa 210-9530 (JP)
(74) Representative: Appelt, Christian W.
(86) International application number: PCT/JP2013/072290
(87) International publication number: WO 2014/054349

(56) References cited:
- JP-A- H0 869 593
- JP-A- H05 241 875
- JP-A- H08 152 905
- JP-A- H10 260 705
- JP-A- 2002 116 921
- JP-A- 2010 146 135
- JP-A- 2013 020 511
- JP-U- S56 168 802
- US-A1- 2010 169 031

## Description

### Technical Field

The present invention relates to a redundant computing system which monitors a power source anomaly, overheat, or the like, of computing devices, and executes predetermined processing, and particularly to a redundant computing system for realizing a safety function of a power converter, such as an inverter or a servo amplifier, which drives an electric motor, or a controlled device such as a PLC.

### Background Art

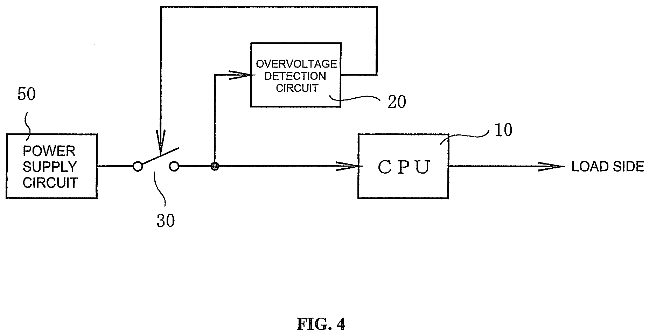

Fig. 4 shows a heretofore known technology of a monitoring and protection device for monitoring a power source anomaly of a CPU and protecting the CPU. In Fig. 4, 10 is a CPU, 20 is an overvoltage detection circuit, 30 is a switch, and 50 is a power supply circuit (the rated voltage is, for example, direct current 5V).

In the heretofore known technology, the overvoltage detection circuit 20 constantly monitors a power supply voltage supplied to the CPU 10 from the power supply circuit 50 via the switch 30. Further, when the power supply voltage exceeds an allowable power supply voltage of the CPU 10, the switch 30 is shut off in response to an output signal from the overvoltage detection circuit 20 to shut off the supply of a power source to the CPU 10, thus protecting the CPU 10.

Meanwhile, a computing system which is provided with redundant CPUs in order to comply with predetermined function safety standards is widely known. In this kind of computing system too, various monitoring and protection measures are taken in order to protect circuit components including the CPUs.

For example, Fig. 5 is a block diagram of a computing system described in PTL 1.

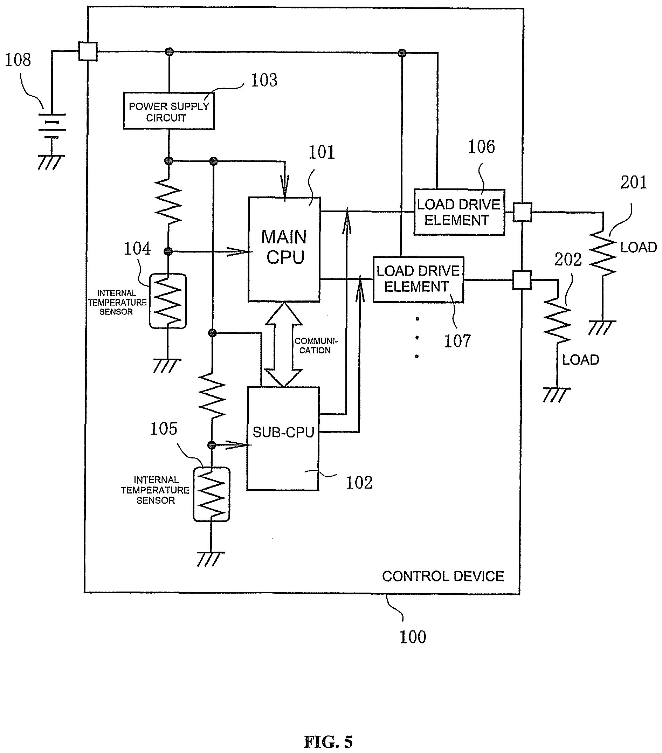

In Fig. 5, a control device 100 includes a main CPU 101 and a sub-CPU 102. A power supply voltage is supplied to the CPUs 101 and 102 from a direct current power supply 108 via a power supply circuit 103. Also, loads 201 and 202 are connected, via respective load drive elements 106 and 107, to the main CPU 101 and sub-CPU 102. The power supply voltage from the direct current power supply 108 is supplied to the load drive elements 106 and 107.

Furthermore, internal temperature sensors 104 and 105 are connected, via resistors, between the power supply circuit 103 and the ground, and voltages equivalent to temperature detection values from the internal temperature sensors 104 and 105 are input into the respective main CPU 101 and sub-CPU 102. Herein, in order to detect the ambient temperature of the main CPU 101 and sub-CPU 102, the internal temperature sensor 104 and 105 are disposed close to the respective CPUs.

In the heretofore known technology, when the internal temperature sensor 104 fails, or when the temperature detection value from the internal temperature sensor 104 exceeds an allowable operation temperature of the CPU, and the main CPU 101 fails or is out of control, the sub-CPU 102 executes predetermined processing based on the temperature detection value from the internal temperature sensor 105, and thus controls the load drive elements 106 and 107, thereby carrying out a so-called fail safe operation.

### Citation List

### Patent Literature

PTL 1: JP-A-2010-146135 (Paragraphs [0010], [0018], and [0019], Fig. 1, and the like)

Further, a redundant set of CPUs is e.g. known from JP 202-116921 A and from JP 2010-146135 A and from JP S56 168802 U (HITACHI, LTD.) 14 December 1981 (1981-12-14).

### Summary of Invention

### Technical Problem

The heretofore known technology shown in Fig. 4 is a monitoring and protection technology solely when a single CPU is used, wherein neither a computing system made redundant using a plurality of CPUs, nor overheat protection measures, nor the like, is taken into account.

Also, the heretofore known technology of Fig. 5 has a problem that it is vulnerable to a power source anomaly because an anomaly of the direct current power supply 108 or power supply circuit 103 has a direct impact on the main CPU 101 and sub-CPU 102.

Furthermore, the heretofore known technology is on the premise that the sub-CPU 102 operates normally, based on the temperature detection value from the internal temperature sensor 105, when in a fail safe operation. In the event that the internal temperature sensor 105 is disposed in the vicinity of the sub-CPU 102, however, when the ambient temperature of the sensor 105 and sub-CPU 102 reaches a high temperature, there is a possibility that the ambient temperature exceeds the allowable operation temperature, and the sub-CPU 102 does not operate normally, even though the internal temperature sensor 105 is operating normally.

Therefore, an object of the invention is to provide a redundant computing system which can reliably execute a computation, a protection operation, an alarm output operation, and the like, even when there is a power source anomaly or a temperature anomaly.

Also, another object of the invention is to provide a redundant computing system which is reduced in hardware and software expenses and can be realized at low cost.

### Solution to Problem

The above-mentioned objects of the invention are solved by a system in accordance with independent claim 1 or independent claim 5.

According to claim 1, the invention, being applied to a redundant computing system which can execute the same computation using a first computing device and second computing device, includes a first anomaly detection circuit which detects an anomaly on the first computing device side; and a second anomaly detection circuit which detects an anomaly on the second computing device side, wherein the first computing device, based on an anomaly signal output from the second anomaly detection circuit, executes anomaly protection processing on the second computing device side, and the second computing device, based on an anomaly signal output from the first anomaly detection circuit, executes anomaly protection processing on the first computing device side.

Specifically, as according to claim 2, the invention includes a first power supply circuit which supplies a power source to a first computing device via a first switch; and a second power supply circuit which supplies a power source to a second computing device via a second switch. Also, the invention includes a first voltage anomaly detection circuit which detects that the power supply voltage of the first power supply circuit is out of the range of an allowable power supply voltage of the first computing device, and outputs a voltage anomaly detection signal; and a second voltage anomaly detection circuit which detects that the power supply voltage of the second power supply circuit is out of the range of an allowable power supply voltage of the second computing device, and outputs a voltage anomaly detection signal.

In the heretofore described configuration, the first computing device shuts off the second switch based on the voltage anomaly detection signal output from the second voltage anomaly detection circuit, and the second computing device shuts off the first switch based on the voltage anomaly detection signal output from the first voltage anomaly detection circuit.

As according to claim 5, the invention is such that it is desirable that when the first computing device shuts off the second switch, the first computing device, as well as outputting an alarm, executes a subsequent computation in place of the second computing device, and that when the second computing device shuts off the first switch, the second computing device, as well as outputting an alarm, executes a subsequent computation in place of the first computing device.

Also, as according to claim 6, the invention includes a first temperature sensor, disposed in the vicinity of the first computing device, which detects an ambient temperature of the first computing device and sends a temperature detection value of the ambient temperature to the second computing device; and a second temperature sensor, disposed in the vicinity of the second computing device, which detects an ambient temperature of the second computing device and sends a temperature detection value of the ambient temperature to the first computing device.

Further, when the temperature detection value from the second temperature sensor is out of the range of an allowable operation temperature of the second computing device, the first computing device stops the operation of the second computing device, and when the temperature detection value from the first temperature sensor is out of the range of an allowable operation temperature of the first computing device, the second computing device stops the operation of the first computing device.

In this case, as according to claim 9, it is desirable that when the first computing device stops the operation of the second computing device, the first computing device, as well as outputting an alarm, executes a subsequent computation in place of the second computing device, and that when the second computing device stops the operation of the first computing device, the second computing device, as well as outputting an alarm, executes a subsequent computation in place of the first computing device.

Furthermore, as according to claim 10, the invention may include the first and second switches, first and second power supply circuits, and first and second voltage anomaly detection circuits in claim 2, and the first and second temperature sensors in claim 6.

In this case, the first computing device shuts off the second switch based on the voltage anomaly detection signal output from the second voltage anomaly detection circuit, and when the temperature detection value from the second temperature sensor is out of the range of an allowable operation temperature of the second computing device, stops the operation of the second computing device. Also, the second computing device shuts off the first switch based on the voltage anomaly detection signal output from the first voltage anomaly detection circuit, and when the temperature detection value from the first temperature sensor is out of the range of an allowable operation temperature of the first computing device, stops the operation of the first computing device.

As according to claim 11, a configuration may be such that when the temperature detection value from the second temperature sensor is out of the range of the allowable operation temperature of the second computing device, the first computing device shuts off the second switch, and that when the temperature detection value from the first temperature sensor is out of the range of the allowable operation temperature of the first computing device, the second computing device shuts off the first switch.

### Advantageous Effects of Invention

According to the invention, when an anomaly occurs in one computing device, specifically, when the power supply voltage of the one computing device is an overvoltage or a low voltage and is out of the range of the allowable power supply voltage, or when the ambient temperature is overheat or a low temperature and is out of the range of the allowable operation temperature, the other computing device can carry out anomaly protection processing such as a subsequent computation and alarm output, a protection operation for the one computing device, and the like. By so doing, it is possible to continue the computation of the redundant computing system without any problem, and it is possible to prevent damage to circuit components due to various anomalies such as a voltage anomaly, such as an overvoltage or a low voltage, and a temperature anomaly, such as overheat or a low temperature.

Furthermore, the invention, the circuit configuration and processing details being comparatively simple, is reduced in hardware and software expenses, and can be realized at low cost.

### Brief Description of Drawings

[Fig. 1] Fig. 1 is a block diagram showing a first embodiment of the invention.
[Fig. 2] Fig. 2 is a block diagram showing a second embodiment of the invention.
[Fig. 3] Fig. 3 is a block diagram showing a third embodiment of the invention.
[Fig. 4] Fig. 4 is a block diagram showing a heretofore known monitoring and protection device.
[Fig. 5] Fig. 5 is a block diagram showing a heretofore known technology described in PTL 1.

### Description of Embodiments

Hereafter, a description will be given, along the drawings, of embodiments of the invention.

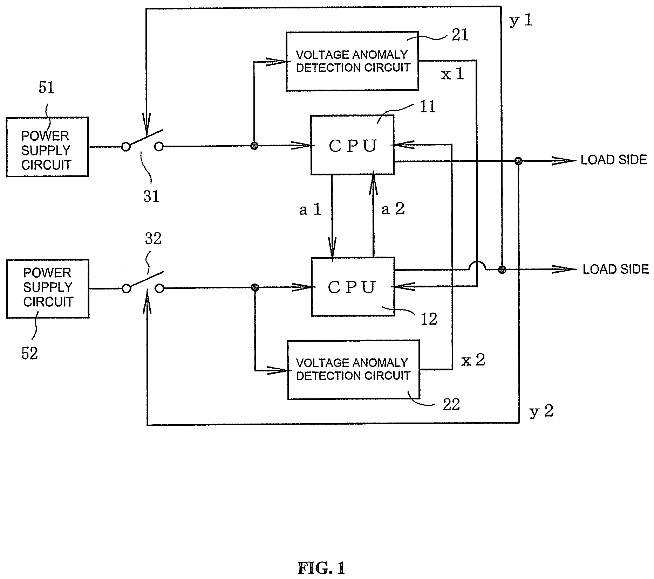

Fig. 1 is a block diagram showing a first embodiment of the invention. In Fig. 1, 11 and 12 are first and second CPUs respectively, and computation outputs from the CPUs 11 and 12 are given to a common load via load control elements or the like shown in Fig. 5. Herein, the first and second CPUs 11 and 12 can execute the same computation and configure a redundant computing system.

A power supply voltage is supplied to the first CPU 11 from a first power supply circuit 51 via a first switch 31, and a power supply voltage is supplied to the second CPU 12 from a second power supply circuit 52 via a second switch 32. Herein, it is in order to comply with predetermined function safety standards that power sources are individually supplied one to each of the first and second CPUs 11 and 12 from the respective power supply circuits 51 and 52.

The power supply voltage supplied to the first CPU 11 is input into a first voltage anomaly detection circuit 21, and a voltage anomaly detection signal x1 output from the voltage anomaly detection circuit 21 is input into the second CPU 12. In the same way, the power supply voltage supplied to the second CPU 12 is input into a second voltage anomaly detection circuit 22, and a voltage anomaly detection signal x2 output from the voltage anomaly detection circuit 22 is input into the first CPU 11.

Also, the first switch 31 can be shut off by a shutoff signal y1 output from the second CPU 12, and the second switch 32 can be shut off by a shutoff signal y2 output from the first CPU 11. The first and second CPUs 11 and 12, using respective signals a1 and a2, can transmit and receive operation information for one CPU's own, control information for the other, and the like, to and from each other.

Next, a description will be given of an operation of the first embodiment.

Now assume that a power source is supplied to the first CPU 11 from the power supply circuit 51 via the switch 31, and that a power source is supplied to the second CPU 12 from the power supply circuit 52 via the switch 32. Herein, assume that it is predetermined that one (for example, the first CPU 11) of the first or second CPU 11 or 12 is used as a main CPU, and the other (for example, the second CPU 12) as a sub-CPU.

Now, when an anomaly occurs in, for example, the power supply circuit 51 on the side of the first CPU 11 which is the main CPU, and the power supply voltage of the power supply circuit 51 exceeds a preset predetermined allowable power supply voltage of the CPU 11, the first voltage anomaly detection circuit 21 detects the anomaly and sends the voltage anomaly detection signal x1 to the second CPU 12. The second CPU 12 which is the sub-CPU, upon receiving the voltage anomaly detection signal x1, outputs the shutoff signal y1, shuts off the first switch 31, shuts off the power source supply to the first CPU 11 from the power supply circuit 51, and stops the operation of the CPU 11.

By so doing, it is possible to prevent the first CPU 11 from failure or breakage due to an excessive power supply voltage, and thus possible to protect the CPU 11 and prevent a malfunction of the load, or the like, from occurring.

Subsequently, a predetermined computation is executed on the load by the operation of the second CPU 12 which has newly become the main CPU.

An event such as a power source anomaly or power source shutoff on the first CPU 11 side only has to be displayed or transmitted to the external as an alarm output by the operation of the second CPU 12, and it is possible to easily realize these display technology and communication technology.

Also, the CPUs 11 and 12 can mutually recognize an event, such as switching between the main CPU and the sub-CPU or alarm generation, by the transmission and reception of the signals a1 and a2 between the CPUs 11 and 12.

As the operation when an anomaly occurs in the power supply circuit 52 on the second CPU 12 side is substantially the same as heretofore described and can be easily inferred, a description is omitted.

In the heretofore described embodiment, a description has been given, as a power source anomaly, of a case in which the power supply voltage exceeds the preset predetermined allowable power supply voltage and becomes an overvoltage, but a configuration may be such as to carry out the same protection operation even when the power supply voltage drops below the preset predetermined allowable power supply voltage and becomes a low voltage. At a low voltage, the first CPU 11 or the second CPU 12 is less likely to break, but there is no difference in that the first CPU 11 or the second CPU 12 cannot operate (is out of operation guarantee).

Therefore, the first voltage anomaly detection circuit 21 detects that the power supply voltage of the first power supply circuit 51 has dropped below the preset predetermined allowable power supply voltage of the first CPU 11, and outputs the voltage anomaly detection signal x1, while the second voltage anomaly detection circuit 22 detects that the power supply voltage of the second power supply circuit 52 has dropped below a preset predetermined allowable power supply voltage of the second CPU 12, and outputs the voltage anomaly detection signal x2.

Further, the first CPU 11 shuts off the second switch 32, in response to the shutoff signal y2, based on the voltage anomaly detection signal x2 output from the second voltage anomaly detection circuit 22, while the second CPU 12 shuts off the first switch 31, in response to the shutoff signal y1, based on the voltage anomaly detection signal x1 output from the first voltage anomaly detection circuit 21.

By so doing, it is possible to prevent the first CPU 11 or second CPU 12 from not being able to operate due to a low voltage, and thus possible to protect the first CPU 11 or second CPU 12 and prevent a malfunction of the load, or the like, from occurring.

According to the first embodiment, by detecting a power source anomaly of one CPU in the redundant computing system and the other CPU carrying out power source shutoff, alarm output, or the like, it is possible to continue to carry out a predetermined computation while protecting the one CPU and the load.

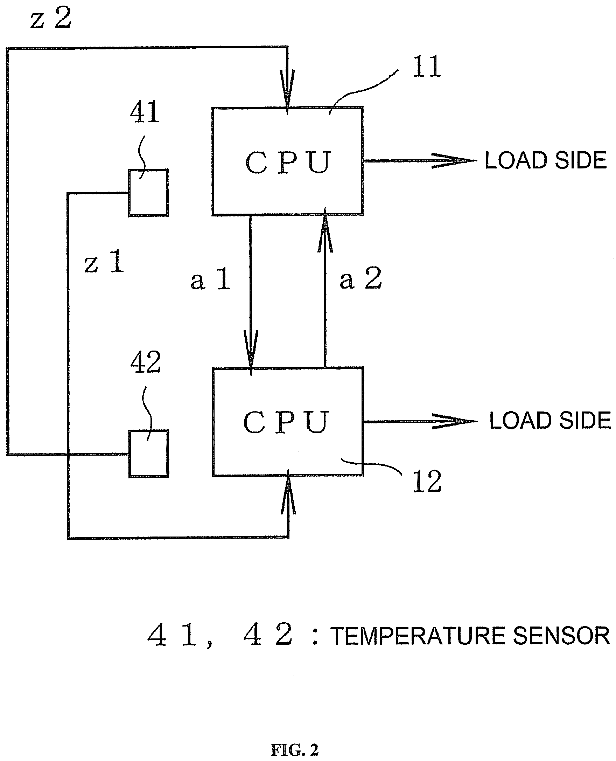

Next, Fig. 2 is a block diagram showing a second embodiment of the invention. The second embodiment relates to an overheat protection function in the redundant computing system.

In Fig. 2, a first temperature sensor 41 is disposed in the vicinity of the first CPU 11, and a second temperature sensor 42 is disposed in the vicinity of the second CPU 12. Also, a temperature detection signal z1 from the first temperature sensor 41 is input into the second CPU 12, and a temperature detection signal z2 from the second temperature sensor 42 is input into the first CPU 11.

Herein, assume that the set of first CPU 11 and first temperature sensor 41 and the set of second CPU 12 and second temperature sensor 42 are disposed inside the system so as to be spaced some distance from each other. Furthermore, a configuration may be such that the set of first CPU 11 and first temperature sensor 41 and the set of second CPU 12 and second temperature sensor 42 are thermally separated from each other by providing a heat insulating layer between the two sets. Also, it is in order to comply with the predetermined function safety standards, in the same way as in the power supply circuits 51 and 52 of the first embodiment, that the temperature sensors 41 and 42 are individually disposed in the first and second CPUs 11 and 12 respectively.

Next, a description will be given of an operation of the second embodiment.

For example, assume that the ambient temperature of the first CPU 11 and first temperature sensor 41 has risen due to an internal failure of the first CPU 11 which is the main CPU, a failure of a peripheral circuit, or the like. At this time, as the temperature detection signal z1 from the first temperature sensor 41 is input into the second CPU 12, the second CPU 12 can recognize that an input temperature detection value is a value so high as to exceed the preset predetermined allowable operation temperature of the CPU 11, and that the ambient temperature of the CPU 11 is in an overheat condition.

Even when the ambient temperature of the first CPU 11 exceeds the allowable operation temperature, the second CPU 12, by being disposed some distance away from the first CPU 11, can operate normally without being affected by the overheat.

Therefore, the second CPU 12 sends the signal a2 to the first CPU 11 and stops the operation of the CPU 11, and subsequently, the second CPU 12 itself executes a predetermined computation on the load as the main CPU.

An overheat anomaly on the first CPU 11 side only has to be displayed or transmitted to the external as alarm output by the operation of the second CPU 12. Also, in the same way as in the first embodiment, the CPUs 11 and 12 can mutually recognize an event, such as switching between the main CPU and the sub-CPU or alarm generation, by transmitting and receiving the signals a1 and a2 between the CPUs 11 and 12.

As an operation when an overheat anomaly occurs on the second CPU 12 side can be easily inferred, a description is omitted here.

According to the second embodiment, by detecting an overheat anomaly on the side of one CPU in the redundant computing system and the other CPU carrying out alternate processing, alarm output, or the like, it is possible to continue to carry out a predetermined computation while protecting the one CPU and the load.

In the heretofore described second embodiment, a description has been given of a case in which there occurs a temperature anomaly wherein the ambient temperature exceeds the preset predetermined allowable operation temperature and is in an overheat condition, but a configuration may be such as to carry out the same protection operation even when the ambient temperature is in a low temperature condition (for example, a condition in which the ambient temperature is lower than minus 10°) wherein the ambient temperature drops below the preset predetermined allowable operation temperature. In the low temperature condition, the first CPU 11 or the second CPU 12 is less likely to break, but there is no difference in that the first CPU 11 or the second CPU 12 cannot operate (is out of operation guarantee), and when the ambient temperature is low, there is also a possibility that dew condensation occurs and a problem occurs in the CPU.

Therefore, when the temperature detection value from the second temperature sensor 42 drops below the preset predetermined allowable operation temperature of the second CPU 12, the first CPU 11 stops the operation of the second CPU 12 based on the temperature detection signal z2, and when the temperature detection value from the first temperature sensor 41 drops below the preset predetermined reference operation temperature of the first CPU 11, the second CPU 12 stops the operation of the first CPU 11 based on the temperature detection signal z1.

By so doing, it is possible to prevent the first CPU 11 or the second CPU 12 from not being able to operate due to the low temperature condition, and thus possible to protect the first CPU 11 or the second CPU 12 and prevent a malfunction of the load, or the like, from occurring.

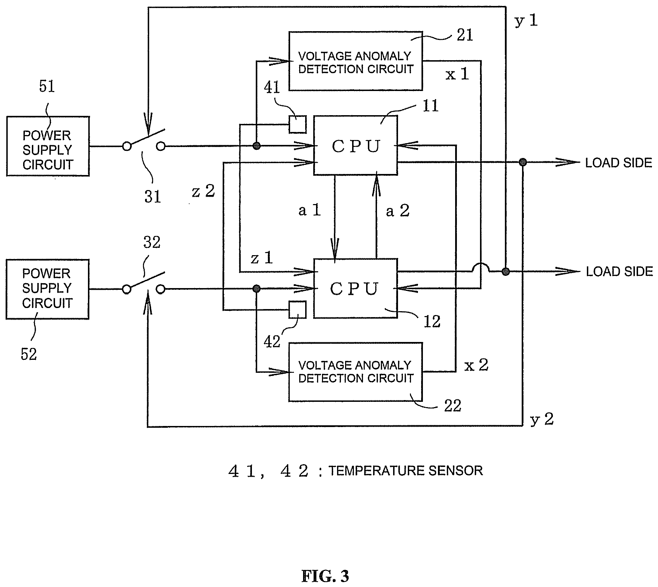

Fig. 3 is a block diagram showing a third embodiment of the invention.

The third embodiment corresponds to a combination of the first embodiment of Fig. 1 and the second embodiment of Fig. 2. In Fig. 3, the same reference signs are given to the same components, circuits and signals as in Figs. 1 and 2.

In the third embodiment, the voltage anomaly detection signal x2 and temperature detection signal z2 on the second CPU 12 side are input into the first CPU 11, and the voltage anomaly detection signal x1 and temperature detection signal z1 on the first CPU 11 side are input into the second CPU 12.

Further, in the same way as in the first embodiment, a configuration is such that the shutoff signal y2 is output to the second switch 32 from the first CPU 11, and the shutoff signal y1 is output to the first switch 31 from the second CPU 12. The power source may be shut off by generating the shutoff signals y1 and y2 only when the voltage anomaly detection signals x1 and x2 on the other CPU side are detected, and in addition to this, the power source may also be shut off by generating the shutoff signals y1 and y2 when a temperature anomaly, such as overheat or a low temperature, is detected from the temperature detection signals z1 and z2 on the other CPU side, too.

According to the third embodiment, it is possible to provide a redundant computing system capable of responding to both a power source anomaly, such as an overvoltage or a low voltage, and a temperature anomaly, such as overheat or a low temperature, on the other CPU side.

In the first to third embodiments, a description has been given of the redundant computing system formed of the duplicated CPUs 11 and 12, but the invention can be applied to a redundant computing system wherein various computing devices including MPUs, DSPs, or the like, are duplicated.

### Industrial Applicability

The invention can be utilized as a redundant computing system for various control devices, measuring devices, or the like.

### Reference Signs List

11, 12: CPU
21, 22: Voltage anomaly detection circuit
31, 32: Switch
41, 42: Temperature sensor
51, 52: Power supply circuit

## Claims

1. A redundant computing system which can execute the same computation using a first computing device (11) and second computing device (12), comprises:
a first power supply circuit (51) which is adapted to supply a power source to a first computing device (11) via a first switch;
a second power supply circuit (52) which is adapted to supply a power source to a second computing device (12) via a second switch (32);
a first voltage anomaly detection circuit (21) which is adapted to detect that the power supply voltage of the first power supply circuit (51) is out of the range of an allowable power supply voltage of the first computing device (11), and is adapted to output a voltage anomaly detection signal; and
a second voltage anomaly detection circuit (22) which is adapted to detect that the power supply voltage of the second power supply circuit (52) is out of the range of an allowable power supply voltage of the second computing device (12), and is adapted to output a voltage anomaly detection signal, the system being **characterized in that**
the first computing device (11) is adapted to shut off the second switch (32) based on the voltage anomaly detection signal output from the second voltage anomaly detection circuit (22), and
the second computing device (12) is adapted to shut off the first switch (31) based on the voltage anomaly detection signal output from the first voltage anomaly detection circuit (21).

2. The redundant computing system according to claim 1, **characterized in that**
the first voltage anomaly detection circuit (21) is adapted to detect that the power supply voltage of the first power supply circuit (51) has exceeded the allowable power supply voltage of the first computing device (11), and is adapted to output a voltage anomaly detection signal, and
the second voltage anomaly detection circuit (22) is adapted to detect that the power supply voltage of the second power supply circuit (52) has exceeded the allowable power supply voltage of the second computing device (12), and is adapted to output a voltage anomaly detection signal.

3. The redundant computing system according to claim 1, **characterized in that**
the first voltage anomaly detection circuit (21) is adapted to detect that the power supply voltage of the first power supply circuit (51) has dropped below the allowable power supply voltage of the first computing device (11), and is adapted to output a voltage anomaly detection signal, and
the second voltage anomaly detection circuit (22) is adapted to detect that the power supply voltage of the second power supply circuit (52) has dropped below the allowable power supply voltage of the second computing device (12), and is adapted to output a voltage anomaly detection signal.

4. The redundant computing system according to any one of claims 1 to 3, **characterized in that**
when the first computing device (11) shuts off the second switch (32), the first computing device (11), as well as outputting an alarm, is adapted to execute a subsequent computation in place of the second computing device (12), and
when the second computing device (12) shuts off the first switch (31), the second computing device (12), as well as outputting an alarm, is adapted to execute a subsequent computation in place of the first computing device (11).

5. A redundant computing system which can execute the same computation using a first computing device (11) and second computing device (12), comprises:
a first temperature sensor, disposed in the vicinity of the first computing device (11), which is adapted to detect an ambient temperature of the first computing device (11) and is adapted to send a temperature detection value of the ambient temperature to the second computing device (12); and
a second temperature sensor, disposed in the vicinity of the second computing device (12), which is adapted to detect an ambient temperature of the second computing device (12) and is adapted to send a temperature detection value of the ambient temperature to the first computing device (11), the system being **characterized in that**
when the temperature detection value from the second temperature sensor is out of the range of an allowable operation temperature of the second computing device (12), the first computing device (11) is adapted to stop the operation of the second computing device (12), and
when the temperature detection value from the first temperature sensor is out of the range of an allowable operation temperature of the first computing device (11), the second computing device (12) is adapted to stop the operation of the first computing device (11).

6. The redundant computing system according to claim 5, **characterized in that**
when the temperature detection value from the second temperature sensor exceeds the allowable operation temperature of the second computing device (12), the first computing device (11) is adapted to stop the operation of the second computing device (12), and
when the temperature detection value from the first temperature sensor exceeds the allowable operation temperature of the first computing device (11), the second computing device (12) is adapted to stop the operation of the first computing device (11).

7. The redundant computing system according to claim 5, **characterized in that**
when the temperature detection value from the second temperature sensor drops below the allowable operation temperature of the second computing device (12), the first computing device (11) is adapted to stop the operation of the second computing device (12), and
when the temperature detection value from the first temperature sensor drops below the allowable operation temperature of the first computing device (11), the second computing device (12) is adapted to stop the operation of the first computing device (11).

8. The redundant computing system according to any one of claims 5 to 7, **characterized in that**
when the first computing device (11) stops the operation of the second computing device (12), the first computing device (11), as well as outputting an alarm, is adapted to execute a subsequent computation in place of the second computing device (12), and
when the second computing device (12) stops the operation of the first computing device (11), the second computing device (12), as well as outputting an alarm, is adapted to execute a subsequent computation in place of the first computing device (11).

9. A redundant computing system according to claim 1, further comprising:
a first temperature sensor, disposed in the vicinity of the first computing device (11), which is adapted to detect an ambient temperature of the first computing device (11) and is adapted to send a temperature detection value to the second computing device (12); and
a second temperature sensor, disposed in the vicinity of the second computing device (12), which is adapted to detect an ambient temperature of the second computing device (12) and is adapted to send a temperature detection value to the first computing device (11), the system being **characterized in that** when the temperature detection value from the second temperature sensor is out of the range of an allowable operation temperature of the second computing device (12), the system is adapted to stop the operation of the second computing device (12), and that
when the temperature detection value from the first temperature sensor is out of the range of an allowable operation temperature of the first computing device (11), the system is adapted to stop the operation of the first computing device (11).

10. The redundant computing system according to claim 9, **characterized in that**
when the temperature detection value from the second temperature sensor is out of the range of the allowable operation temperature of the second computing device (12), the first computing device (11) is adapted to shut off the second switch (32), and
when the temperature detection value from the first temperature sensor is out of the range of the allowable operation temperature of the first computing device (11), the second computing device (12) is adapted to shut off the first switch (31).

## Patentansprüche

1. Redundantes Rechensystem, in dem die gleiche Berechnung unter Verwendung einer ersten Rechenvorrichtung (11) und einer zweiten Rechenvorrichtung (12) ausgeführt werden kann, mit:
einer ersten Stromversorgungsschaltung (51), die geeignet ist, über einen ersten Schalter eine Stromquelle an eine erste Rechenvorrichtung (11) anzulegen,
einer zweiten Stromversorgungsschaltung (52), die geeignet ist, über einen zweiten Schalter (32) eine Stromquelle an eine zweite Rechenvorrichtung (12) anzulegen,
einer ersten Spannungsanomalie-Ermittlungsschaltung (21), die geeignet ist zu erfassen, dass die Stromversorgungsspannung der ersten Stromversorgungsschaltung (51) außerhalb des Bereichs einer zulässigen Stromversorgungsspannung der ersten Rechenvorrichtung (11) liegt, und die geeignet ist, ein Spannungsanomalie-Ermittlungssignal auszugeben, und
einer zweiten Spannungsanomalie-Ermittlungsschaltung (22), die geeignet ist zu erfassen, dass die Stromversorgungsspannung der zweiten Stromversorgungsschaltung (52) außerhalb des Bereichs einer zulässigen Stromversorgungsspannung der zweiten Rechenvorrichtung (12) liegt, und die geeignet ist, ein Spannungsanomalie-Ermittlungssignal auszugeben, wobei das System **dadurch gekennzeichnet ist, dass**
die erste Rechenvorrichtung (11) geeignet ist, den zweiten Schalter (32) auf Basis des Spannungsanomalie-Ermittlungssignals, das von der zweiten Spannungsanomalie-Ermittlungsschaltung (22) ausgegeben wurde, auszuschalten und
die zweite Rechenvorrichtung (12) geeignet ist, den ersten Schalter (31) auf Basis des Spannungsanomalie-Ermittlungssignals, das von der ersten Spannungsanomalie-Ermittlungsschaltung (21) ausgegeben wurde, auszuschalten.

2. Redundantes Rechensystem nach Anspruch 1, **dadurch gekennzeichnet, dass**
die erste Spannungsanomalie-Ermittlungsschaltung (21) geeignet ist zu erfassen, dass die Stromversorgungsspannung der ersten Stromversorgungsschaltung (51) die zulässige Stromversorgungsspannung der ersten Rechenvorrichtung (11) überschritten hat, und geeignet ist, ein Spannungsanomalie-Ermittlungssignal auszugeben, und
die zweite Spannungsanomalie-Ermittlungsschaltung (22) geeignet ist zu erfassen, dass die Stromversorgungsspannung der zweiten Stromversorgungsschaltung (52) die zulässige Stromversorgungsspannung der zweiten Rechenvorrichtung (12) überschritten hat, und geeignet ist, ein Spannungsanomalie-Ermittlungssignal auszugeben.

3. Redundantes Rechensystem nach Anspruch 1, **dadurch gekennzeichnet, dass**
die erste Spannungsanomalie-Ermittlungsschaltung (21) geeignet ist zu erfassen, dass die Stromversorgungsspannung der ersten Stromversorgungsschaltung (51) unter die zulässige Stromversorgungsspannung der ersten Rechenvorrichtung (11) abgefallen ist, und geeignet ist, ein Spannungsanomalie-Ermittlungssignal auszugeben, und
die zweite Spannungsanomalie-Ermittlungsschaltung (22) geeignet ist zu erfassen, dass die Stromversorgungsspannung der zweiten Stromversorgungsschaltung (52) unter die zulässige Stromversorgungsspannung der zweiten Rechenvorrichtung (12) abgefallen ist, und geeignet ist, ein Spannungsanomalie-Ermittlungssignal auszugeben

4. Redundantes Rechensystem nach einem der Ansprüche 1 bis 3, **dadurch gekennzeichnet, dass**
die erste Rechenvorrichtung (11) dann, wenn die erste Rechenvorrichtung (11) den zweiten Schalter (32) ausschaltet, sowohl einen Alarm auslöst als auch geeignet ist, anstelle der zweiten Rechenvorrichtung (12) eine nachfolgende Berechnung auszuführen, und
die zweite Rechenvorrichtung (12) dann, wenn die zweite Rechenvorrichtung (12) den ersten Schalter (31) ausschaltet, sowohl einen Alarm auslöst als auch geeignet ist, anstelle der ersten Rechenvorrichtung (11) eine nachfolgende Berechnung auszuführen.

5. Redundantes Rechensystem, in dem die gleiche Berechnung unter Verwendung einer ersten Rechenvorrichtung (11) und einer zweiten Rechenvorrichtung (12) ausgeführt werden kann, mit:
einem ersten Temperatursensor, der in der Nähe der ersten Rechenvorrichtung (11) angeordnet ist, welcher geeignet ist, eine Umgebungstemperatur der ersten Rechenvorrichtung (11) zu ermitteln, und geeignet ist, einen Temperaturermittlungswert der Umgebungstemperatur an die zweite Rechenvorrichtung (12) zu senden, und
einem zweiten Temperatursensor, der in der Nähe der zweiten Rechenvorrichtung (12) angeordnet ist, welcher geeignet ist, eine Umgebungstemperatur der zweiten Rechenvorrichtung (12) zu ermitteln, und geeignet ist, einen Temperaturermittlungswert der Umgebungstemperatur an die erste Rechenvorrichtung (11) zu senden, wobei das System
**dadurch gekennzeichnet ist, dass**
die erste Rechenvorrichtung (11) geeignet ist, den Betrieb der zweiten Rechenvorrichtung (12) zu stoppen, wenn der Temperaturermittlungswert aus dem zweiten Temperatursensor außerhalb des Bereichs einer zulässigen Betriebstemperatur der zweiten Rechenvorrichtung (12) liegt, und
die zweite Rechenvorrichtung (12) geeignet ist, den Betrieb der ersten Rechenvorrichtung (11) zu stoppen, wenn der Temperaturermittlungswert aus dem ersten Temperatursensor außerhalb des Bereichs einer zulässigen Betriebstemperatur der ersten Rechenvorrichtung (11) liegt.

6. Redundantes Rechensystem nach Anspruch 5, **dadurch gekennzeichnet, dass**
die erste Rechenvorrichtung (11) geeignet ist, den Betrieb der zweiten Rechenvorrichtung (12) zu stoppen, wenn der Temperaturermittlungswert aus dem zweiten Temperatursensor die zulässige Betriebstemperatur der zweiten Rechenvorrichtung (12) überschreitet, und
die zweite Rechenvorrichtung (12) geeignet ist, den Betrieb der ersten Rechenvorrichtung (11) zu stoppen, wenn der Temperaturermittlungswert aus dem ersten Temperatursensor die zulässige Betriebstemperatur der ersten Rechenvorrichtung (11) überschreitet.

7. Redundantes Rechensystem nach Anspruch 5, **dadurch gekennzeichnet, dass**
die erste Rechenvorrichtung (11) geeignet ist, den Betrieb der zweiten Rechenvorrichtung (12) zu stoppen, wenn der Temperaturermittlungswert aus dem zweiten Temperatursensor unter die zulässige Betriebstemperatur der zweiten Rechenvorrichtung (12) abfällt, und
die zweite Rechenvorrichtung (12) geeignet ist, den Betrieb der ersten Rechenvorrichtung (11) zu stoppen, wenn der Temperaturermittlungswert aus dem ersten Temperatursensor unter die zulässige Betriebstemperatur der ersten Rechenvorrichtung (11) abfällt.

8. Redundantes Rechensystem nach einem der Ansprüche 5 bis 7, **dadurch gekennzeichnet, dass**
die erste Rechenvorrichtung (11) dann, wenn die erste Rechenvorrichtung (11) den Betrieb der zweiten Rechenvorrichtung (12) stoppt, sowohl einen Alarm auslöst als auch geeignet ist, anstelle der zweiten Rechenvorrichtung (12) eine nachfolgende Berechnung auszuführen, und
die zweite Rechenvorrichtung (12) dann, wenn die zweite Rechenvorrichtung (12) den Betrieb der ersten Rechenvorrichtung (11) stoppt, sowohl einen Alarm auslöst als auch geeignet ist, anstelle der ersten Rechenvorrichtung (11) eine nachfolgende Berechnung auszuführen.

9. Redundantes Rechensystem nach Anspruch 1, ferner mit:
einem ersten Temperatursensor, der in der Nähe der ersten Rechenvorrichtung (11) angeordnet ist, welcher geeignet ist, eine Umgebungstemperatur der ersten Rechenvorrichtung (11) zu ermitteln, und geeignet ist, einen Temperaturermittlungswert an die zweite Rechenvorrichtung (12) zu senden, und
einem zweiten Temperatursensor, der in der Nähe der zweiten Rechenvorrichtung (12) angeordnet ist, welcher geeignet ist, eine Umgebungstemperatur der zweiten Rechenvorrichtung (12) zu ermitteln, und geeignet ist, einen Temperaturermittlungswert an die erste Rechenvorrichtung (11) zu senden, wobei das System
**dadurch gekennzeichnet ist, dass**
das System geeignet ist, den Betrieb der zweiten Rechenvorrichtung (12) zu stoppen, wenn der Temperaturermittlungswert aus dem zweiten Temperatursensor außerhalb des Bereichs einer zulässigen Betriebstemperatur der zweiten Rechenvorrichtung (12) liegt, und
das System geeignet ist, den Betrieb der ersten Rechenvorrichtung (11) zu stoppen, wenn der Temperaturermittlungswert aus dem ersten Temperatursensor außerhalb des Bereichs einer zulässigen Betriebstemperatur der ersten Rechenvorrichtung (11) liegt.

10. Redundantes Rechensystem nach Anspruch 9, **dadurch gekennzeichnet, dass**
die erste Rechenvorrichtung (11) geeignet ist, den zweiten Schalter (32) auszuschalten, wenn der Temperaturermittlungswert aus dem zweiten Temperatursensor außerhalb des Bereichs der zulässigen Betriebstemperatur der zweiten Rechenvorrichtung (12) liegt, und
die zweite Rechenvorrichtung (12) geeignet ist, den ersten Schalter (31) auszuschalten, wenn der Temperaturermittlungswert aus dem ersten Temperatursensor außerhalb des Bereichs der zulässigen Betriebstemperatur der ersten Rechenvorrichtung (11) liegt.

## Revendications

1. Système informatique redondant qui peut exécuter le même calcul en utilisant un premier dispositif informatique (11) et un deuxième dispositif informatique (12), comprenant :
un premier circuit d'alimentation (51) qui est conçu pour fournir une source de puissance à un premier dispositif informatique (11) par l'intermédiaire d'un premier commutateur;
un deuxième circuit d'alimentation (52) qui est conçu pour fournir une source de puissance à un deuxième dispositif informatique (12) par l'intermédiaire d'un deuxième commutateur (32) ;
un premier circuit de détection d'anomalie de tension (21) qui est conçu pour détecter que la tension d'alimentation du premier circuit d'alimentation (51) est en-dehors de la plage d'une tension d'alimentation autorisée du premier dispositif informatique (11), et qui est conçu pour délivrer un signal de détection d'anomalie de tension ; et
un deuxième circuit de détection d'anomalie de tension (22) qui est conçu pour détecter que la tension d'alimentation du deuxième circuit d'alimentation (52) est en-dehors de la plage d'une tension d'alimentation autorisée du deuxième dispositif informatique (12), et qui est conçu pour délivrer un signal de détection d'anomalie de tension, le système étant **caractérisé en ce que**
le premier dispositif informatique (11) est conçu pour ouvrir le deuxième commutateur (32) sur la base du signal de détection d'anomalie de tension délivré par le deuxième circuit de détection d'anomalie de tension (22), et
le deuxième dispositif informatique (12) est conçu pour ouvrir le premier commutateur (31) sur la base du signal de détection d'anomalie de tension délivré par le premier circuit de détection d'anomalie de tension (21).

2. Système informatique redondant selon la revendication 1, **caractérisé en ce que**
le premier circuit de détection d'anomalie de tension (21) est conçu pour détecter que la tension d'alimentation du premier circuit d'alimentation (51) a dépassé la tension d'alimentation autorisée du premier dispositif informatique (11), et est conçu pour délivrer un signal de détection d'anomalie de tension, et
le deuxième circuit de détection d'anomalie de tension (22) est conçu pour détecter que la tension d'alimentation du deuxième circuit d'alimentation (52) a dépassé la tension d'alimentation autorisée du deuxième dispositif informatique (12), et est conçu pour délivrer un signal de détection d'anomalie de tension.

3. Système informatique redondant selon la revendication 1, **caractérisé en ce que**
le premier circuit de détection d'anomalie de tension (21) est conçu pour détecter que la tension d'alimentation du premier circuit d'alimentation (51) a chuté au-dessous de la tension d'alimentation autorisée du premier dispositif informatique (11), et est conçu pour délivrer un signal de détection d'anomalie de tension, et
le deuxième circuit de détection d'anomalie de tension (22) est conçu pour détecter que la tension d'alimentation du deuxième circuit d'alimentation (52) a chuté au-dessous de la tension d'alimentation autorisée du deuxième dispositif informatique (12), et est conçu pour délivrer un signal de détection d'anomalie de tension.

4. Système informatique redondant selon l'une quelconque des revendications 1 à 3, **caractérisé en ce que**
lorsque le premier dispositif informatique (11) ouvre le deuxième commutateur (32), le premier dispositif informatique (11), tout en délivrant une alarme, est conçu pour exécuter un calcul suivant à la place du deuxième dispositif informatique (12), et
lorsque le deuxième dispositif informatique (12) ouvre le premier commutateur (31), le deuxième dispositif informatique (12), tout en délivrant une alarme, est conçu pour exécuter un calcul suivant à la place du premier dispositif informatique (11).

5. Système informatique redondant qui peut exécuter le même calcul en utilisant un premier dispositif informatique (11) et un deuxième dispositif informatique (12), comprenant :
un premier capteur de température, disposé dans le voisinage du premier dispositif informatique (11), qui est conçu pour détecter une température ambiante du premier dispositif informatique (11) et qui est conçu pour envoyer une valeur de détection de température de la température ambiante au deuxième dispositif informatique (12) ; et
un deuxième capteur de température, disposé dans le voisinage du deuxième dispositif informatique (12), qui est conçu pour détecter une température ambiante du deuxième dispositif informatique (12) et qui est conçu pour envoyer une valeur de détection de température de la température ambiante au premier dispositif informatique (11), le système étant **caractérisé en ce que**
lorsque la valeur de détection de température provenant du deuxième capteur de température est en-dehors de la plage d'une température de fonctionnement autorisée du deuxième dispositif informatique (12), le premier dispositif informatique (11) est conçu pour arrêter le fonctionnement du deuxième dispositif informatique (12), et
lorsque la valeur de détection de température provenant du premier capteur de température est en-dehors de la plage d'une température de fonctionnement autorisée du premier dispositif informatique (11), le deuxième dispositif informatique (12) est conçu pour arrêter le fonctionnement du premier dispositif informatique (11).

6. Système informatique redondant selon la revendication 5, **caractérisé en ce que**
lorsque la valeur de détection de température provenant du deuxième capteur de température dépasse la température de fonctionnement autorisée du deuxième dispositif informatique (12), le premier dispositif informatique (11) est conçu pour arrêter le fonctionnement du deuxième dispositif informatique (12), et
lorsque la valeur de détection de température provenant du premier capteur de température dépasse la température de fonctionnement autorisée du premier dispositif informatique (11), le deuxième dispositif informatique (12) est conçu pour arrêter le fonctionnement du premier dispositif informatique (11).

7. Système informatique redondant selon la revendication 5, **caractérisé en ce que**
lorsque la valeur de détection de température provenant du deuxième capteur de température chute au-dessous de la température de fonctionnement autorisée du deuxième dispositif informatique (12), le premier dispositif informatique (11) est conçu pour arrêter le fonctionnement du deuxième dispositif informatique (12), et
lorsque la valeur de détection de température provenant du premier capteur de température chute au-dessous de la température de fonctionnement autorisée du premier dispositif informatique (11), le deuxième dispositif informatique (12) est conçu pour arrêter le fonctionnement du premier dispositif informatique (11).

8. Système informatique redondant selon l'une quelconque des revendications 5 à 7, **caractérisé en ce que**
lorsque le premier dispositif informatique (11) arrête le fonctionnement du deuxième dispositif informatique (12), le premier dispositif informatique (11), tout en délivrant une alarme, est conçu pour exécuter un calcul suivant à la place du deuxième dispositif informatique (12), et
lorsque le deuxième dispositif informatique (12) arrête le fonctionnement du premier dispositif informatique (11), le deuxième dispositif informatique (12), tout en délivrant une alarme, est conçu pour exécuter un calcul suivant à la place du premier dispositif informatique (11).

9. Système informatique redondant selon la revendication 1, comprenant en outré :
un premier capteur de température, disposé dans le voisinage du premier dispositif informatique (11), qui est conçu pour détecter une température ambiante du premier dispositif informatique (11) et qui est conçu pour envoyer une valeur de détection de température au deuxième dispositif informatique (12) ; et
un deuxième capteur de température, disposé dans le voisinage du deuxième dispositif informatique (12), qui est conçu pour détecter une température ambiante du deuxième dispositif informatique (12) et qui est conçu pour envoyer une valeur de détection de température au premier dispositif informatique (11), le système étant **caractérisé en ce que**
lorsque la valeur de détection de température provenant du deuxième capteur de température est en-dehors de la plage d'une température de fonctionnement autorisée du deuxième dispositif informatique (12), le système est conçu pour arrêter le fonctionnement du deuxième dispositif informatique (12), et **en ce que**
lorsque la valeur de détection de température provenant du premier capteur de température est en-dehors de la plage d'une température de fonctionnement autorisée du premier dispositif informatique (11), le système est conçu pour arrêter le fonctionnement du premier dispositif informatique (11).

10. Système informatique redondant selon la revendication 9, **caractérisé en ce que**
lorsque la valeur de détection de température provenant du deuxième capteur de température est en-dehors de la plage de la température de fonctionnement autorisée du deuxième dispositif informatique (12), le premier dispositif informatique (11) est conçu pour ouvrir le deuxième commutateur (32), et
lorsque la valeur de détection de température provenant du premier capteur de température est en-dehors de la plage de la température de fonctionnement autorisée du premier dispositif informatique (11), le deuxième dispositif informatique (12) est conçu pour ouvrir le premier commutateur (31).
